# EUROPEAN PATENT SPECIFICATION

(11) **EP 3 665 537 B1**
(45) Date of publication and mention of the grant of the patent: **13.05.2026**
(21) Application number: 17921301.2
(22) Date of filing: 11.08.2017
(51) Int. Cl.: G05D 1/00, G08G 5/00, H04W 36/00, G06F 21/44, H04W 4/021, H04L 9/40, H04W 12/069, H04W 12/64, G08G 5/26, G08G 5/55, H04W 36/08, H04W 36/16, G08G 5/32, G08G 5/57, G08G 5/59

(54) **GENERATING GEO-FENCE DATA**
ERZEUGUNG VON GEOFENCE-DATEN
GÉNÉRATION DE DONNÉES DE BARRIÈRE GÉOGRAPHIQUE

(43) Date of publication of application: 17.06.2020
(73) Proprietor: Lenovo (Beijing) Limited, Beijing 100085 (CN)
(72) Inventor: HAN, Jing, Beijing 100020 (CN); WU, Lianhai, Beijing 100028 (CN); WANG, Haiming, Beijing 100032 (CN); ZHANG, Zhuoyun, Beijing 100089 (CN)
(74) Representative: Openshaw & Co.
(86) International application number: PCT/CN2017/097249
(87) International publication number: WO 2019/028899

(56) References cited:
- EP-A1- 3 169 106
- EP-A1- 3 349 085
- WO-A1-2009/152472
- WO-A1-2016/015311
- WO-A1-2017/042403
- WO-A1-2018/067914
- CN-A- 103 809 575
- CN-A- 106 257 944
- US-A1- 2013 310 053
- US-A1- 2016 309 337

## Description

### FIELD

The subject matter disclosed herein relates to geo-fence data for an aerial device.

### BACKGROUND

### DESCRIPTION OF THE RELATED ART

An aerial device such as an aerial drone may communicate with through a mobile telephone network.

US 2013/310053 A1 describes creating geofence assistance information that includes forming a geographic area enclosing a geofence boundary. WO 2009/152472 A1 describes a system whereby the position of a target being tracked is compared with a predefined geofence boundary. WO 2017/042403 A1 discloses a method, system and devices for establishing secure control mechanisms for the aerial navigation of unmanned vehicles.

### BRIEF SUMMARY

The invention is defined by the appended claims. Claim 1 defines a method in an aerial device and claim 8 defines an apparatus. In the following, any method and/or apparatus referred to as embodiments but nevertheless do not fall within the scope of the appended claims are to be understood as examples helpful in understanding the invention.

A method for geo-fence data is disclosed. A processor registers an aerial device at an aerial server. In addition, the processor calculates the geo-fence data for the aerial device. The geo-fence data includes geo-fence boundaries and a cell list of base stations permitted to communicate with the aerial device. Each base station of the cell list is within the geo-fence boundaries. The processor further communicates the geo-fence data to a base station.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1 is a schematic block diagram illustrating one embodiment of an aerial device communication system;
Figure 2A is a schematic block diagram illustrating one embodiment of flight path data;
Figure 2B is a schematic block diagram illustrating one embodiment of a measurement report;
Figure 2C is a schematic block diagram illustrating one embodiment of geo-fence data;
Figure 2D is a schematic block diagram illustrating one embodiment of measurement data;
Figure 2E is a schematic block diagram illustrating one embodiment of a handover request;
Figure 2F is a schematic block diagram illustrating one embodiment of an aerial device certification confirmation;
Figure 2G is a schematic block diagram illustrating one embodiment of system data;
Figure 2H is a schematic block diagram illustrating one embodiment of a flight path data request;
Figure 3A is a schematic block diagram illustrating one embodiment of a geo-fence process;
Figure 3B is a schematic diagram illustrating one embodiment of mobile telephone cells;
Figure 3C is a schematic diagram illustrating one embodiment of mobile telephone cells and an aerial device flight path;
Figure 3D is a schematic block diagram illustrating one embodiment of a cell list;
Figure 3E is a schematic block diagram illustrating one alternate embodiment of a cell list;
Figure 3F is a schematic diagram illustrating one alternate embodiment of mobile telephone cells and an aerial device flight path;
Figure 3G is a schematic block diagram illustrating one embodiment of a cell list;
Figure 3H is a schematic block diagram illustrating one alternate embodiment of a cell list;
Figure 4 is a schematic block diagram illustrating one embodiment of a computer;
Figure 5A is a schematic flow chart diagram illustrating one embodiment of a geo-fence generation method;
Figure 5B is a schematic flow chart diagram illustrating one alternate embodiment of a geo-fence generation method;
Figure 5C is a schematic flow chart diagram illustrating one embodiment of a geo-fence data utilization method;
Figure 5D is a schematic flow chart diagram illustrating one embodiment of an aerial device certification method;
Figure 5E is a schematic flow chart diagram illustrating one embodiment of an aerial device handover method; and
Figure 5F is a schematic flow chart diagram illustrating one embodiment of a geo-fence generation method.

### DETAILED DESCRIPTION

As will be appreciated by one skilled in the art, aspects of the embodiments may be embodied as a system, method or program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Many of the functional units described in this specification have been labeled as modules, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, comprise one or more physical or logical blocks of executable code which may, for instance, be organized as an object, procedure, or function. Nevertheless, the executables of an identified module need not be physically located together, but may comprise disparate instructions stored in different locations which, when joined logically together, comprise the module and achieve the stated purpose for the module.

Indeed, a module of code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Code for carrying out operations for embodiments may be written in any combination of one or more programming languages including an object oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. This code may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams block or blocks.

The code may also be stored in a storage device that can direct a computer, other programmable data processing apparatus, or other devices to function in a particular manner, such that the instructions stored in the storage device produce an article of manufacture including instructions which implement the function/act specified in the schematic flowchart diagrams and/or schematic block diagrams block or blocks.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart and/or block diagram block or blocks.

The schematic flowchart diagrams and/or schematic block diagrams in the Figures illustrate the architecture, functionality, and operation of possible implementations of apparatuses, systems, methods and program products according to various embodiments. In this regard, each block in the schematic flowchart diagrams and/or schematic block diagrams may represent a module, segment, or portion of code, which comprises one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

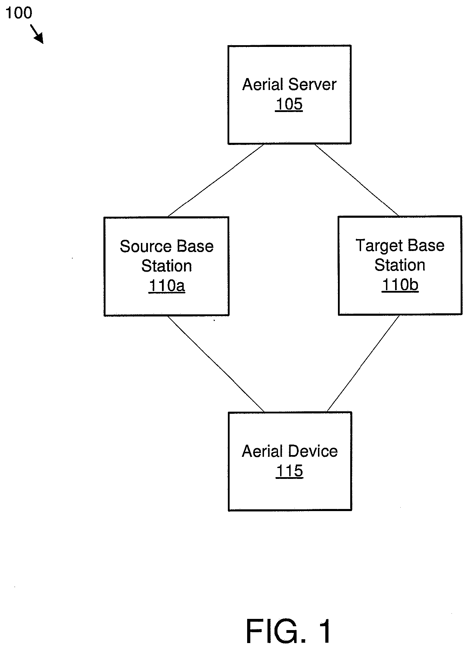

Figure 1 is a schematic block diagram illustrating one embodiment of an aerial device communication system 100. The system 100 may communicate with an aerial device 115 using cells of a mobile telephone network. In the depicted embodiment, the system 100 includes an aerial server 105, one or more base stations 110, and the aerial device 115. Communications with the aerial device 115 may be used to control the aerial device. In addition, communications with the aerial device 115 may retrieve data from the aerial device 115 and/or communicate data to the aerial device 115.

The aerial device 115 may be a drone, an autonomous aerial vehicle, a manned vehicle, and the like. The aerial device 115 may employ the mobile telephone network for some or all communication with the aerial device 115 over the area covered by the mobile telephone network. The area covered by the mobile telephone network may be significantly larger than is possible using direct wireless communication between a controller and the aerial device 115.

Each base station 110 may communicate with mobile devices such as a mobile telephone within a cell. Base stations 110 may also communicate wirelessly with the aerial device 115. In the depicted embodiment, a source base station 110a and a target base station 110b are shown. A plurality of cells may form the mobile telephone network, as is described hereafter. The aerial server 105 may coordinate communications with the aerial device 115.

Because the aerial device 115 is typically elevated above the ground, and during some procedures such as measuring base stations 110, the aerial device 115 may be capable of communicating with more base stations 110 than mobile devices can communicate with. If the aerial device 115 communicates with the base stations 110 using the same processes used by a mobile device when measuring base stations 110, the aerial device 115 may interact with significantly more base stations 110 and/or cells.

The embodiments register the aerial device 115 and calculate geo-fence data for the aerial device. The geo-fence data may be used to reduce and/or manage the flight area of the aerial device 115. In addition, the geo-fence data may be used to decrease the number of base stations 110 that are measured by the aerial device 115.

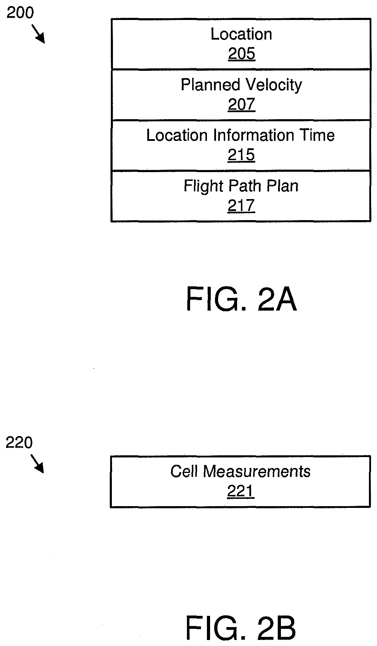

Figure 2A is a schematic block diagram illustrating one embodiment of flight path data 200. The flight path data 200 may describe the flight path of the aerial device 115. The flight path data 200 may be organized as a data structure in a memory and/or transmitted as digital data. In the depicted embodiment, the flight path data 200 includes a location 205, a planned velocity 207, a location measurement time 215, and a flight path plan 217.

The location 205 may specify a current position of the aerial device 115. The current position may include an address, two-dimensional coordinates, and/or three-dimensional coordinates. In one embodiment, the location 205 is recorded as a vector that expresses a motion at the current position.

The planned velocity 207 may indicate the planned velocity profile for the aerial device 115. In one embodiment, the planned velocity 207 is a scalar number. Alternatively, the planned velocity 207 may be a vector that indicates the planned velocity at a plurality of times. The location measurement time 215 may indicate when the location 205 is measured.

The flight path plan 217 may indicate the flight path of the aerial device 115. The flight path plan 217 may specify one or more path vectors. The path vectors may be linked to form a contiguous path. Alternatively, the path vectors may indicate planned paths, with the aerial device 115 moving without a plan between the path vectors. The path vectors may have a granularity in the range of 1-5 meters (m). Alternatively, the path vectors may have a granularity in the range of 5-50 m.

In a certain embodiment, the flight path plan 217 indicates an area in which the aerial device 115 will operate, without specifying path vectors where the aerial device 115 will be within the area.

Figure 2B is a schematic block diagram illustrating one embodiment of a measurement report 220. The aerial device 115 may communicate the measurement report 200 to a base station 110. The measurement report 220 may be organized as a data structure in a memory and/or transmitted as digital data. In the depicted embodiment, the measurement report 220 includes cell measurements 221. The cell measurements 221 may comprise measurements make of one or more cells and/or corresponding base stations 110 that are included in measurement data. The cell measurements 221 may comprise measurements to only the cells and/or base stations 110 included in in the measurement data as will be described hereafter.

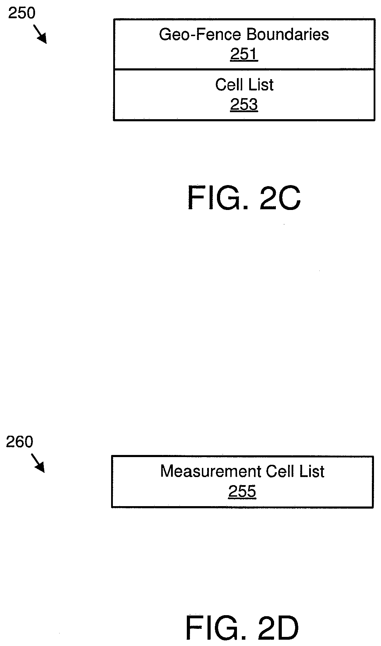

Figure 2C is a schematic block diagram illustrating one embodiment of geo-fence data 250. The geo-fence data 250 may limit the cells and/or base stations 110 that the aerial device 115 communicates with and/or the volume and/or area where the aerial device 115 may navigate. The geo-fence data 250 may be organized as a data structure in a memory and/or transmitted as digital data. In the depicted embodiment, the geo-fence data 250 includes geo-fence boundaries 251 and a cell list 253.

The geo-fence boundaries 251 may describe a two-dimensional area and/or a three-dimensional volume. The aerial device 115 may be restricted to communicating with base stations 110 and/or cells within the geo-fence boundaries 251. In addition, the aerial device 115 may be restricted to navigating within the geo-fence boundaries 251.

The cell list 253 comprises identifiers for base stations 110 and/or cells permitted to communicate with the aerial device 115. Each base station 110 and/or corresponding cell of the cell list 253 may be within the geo-fence boundaries 251.

Figure 2D is a schematic block diagram illustrating one embodiment of measurement data 260. The measurement data 260 may identify base stations 110 and/or corresponding cells that the aerial device 115 is allowed to measure. The measurement data 260 may be organized as a data structure in a memory and/or transmitted as digital data. The measurement data 260 includes a measurement cell list 255. The measurement cell list 255 may only comprise base stations 110 or identifiers of base stations 110 and/or cells that are both in the cell list 253 and are one of the base station 110 and/or corresponding cell communicating with the aerial device 115 and a neighbor base station 110 to the base station 110 and/or corresponding cell communicating with the aerial device 115.

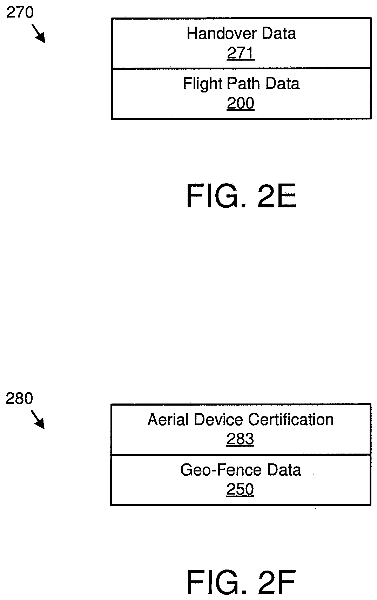

Figure 2E is a schematic block diagram illustrating one embodiment of a handover request 270. The source base station 110a may communicate the handover request 270 to the target base station 110b to transfer the aerial device 115 from the source base station 110a to the target base station 110b. The handover request 270 may be organized as a data structure in a memory and/or transmitted as digital data. In the depicted embodiment, the handover request 270 includes handover data 271 and the flight path data 200.

The handover data 271 may describe the aerial device 115. The handover data may further indicate that the target base station 110b should take over communications with the aerial device 115.

Figure 2F is a schematic block diagram illustrating one embodiment of an aerial device certification confirmation 280. The aerial device certification confirmation 280 may be used to request the flight path data 200 from the aerial device 115. The aerial device certification confirmation 280 may be organized as a data structure in a memory and/or transmitted as digital data. In the depicted embodiment, the aerial device certification confirmation 280 includes an aerial device certification 283 and the geo-fence data 250.

The aerial device certification 283 may include one or more credentials of the aerial device 115 and/or the aerial server 105. The credentials may validate a base station 110 to the aerial device 115. In addition, the credentials may validate the aerial device 115 to the base station 110.

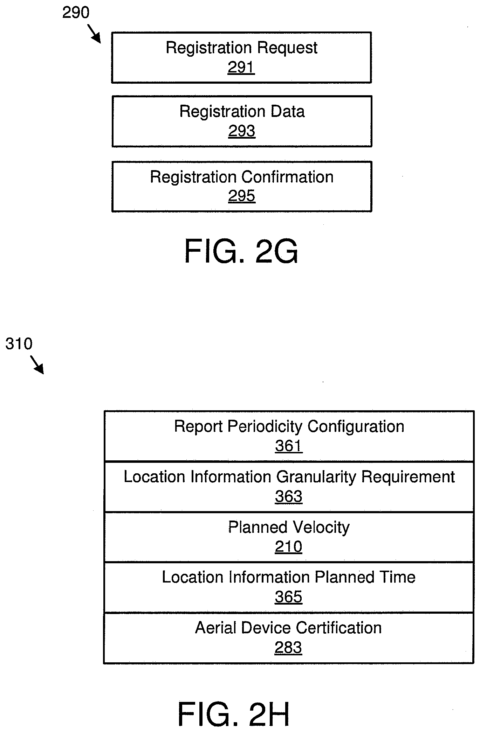

Figure 2G is a schematic block diagram illustrating one embodiment of system data 290. The system data 290 may be organized as a data structure in a memory and/or transmitted as digital data. The system data 290 includes a registration request 291, registration data 293, and a registration confirmation 295.

The registration request 291 may identify an aerial device 115. The aerial device 115 may self identify with a unique identifier. Alternatively, the aerial device 115 may be assigned an identifier by a base station 110.

The registration data 293 may identify the aerial device 115 within the system 100. The registration data 293 may include an identifier for the aerial device 115, a log of interactions with the aerial device 115, and the like.

The registration confirmation 295 may confirm that the aerial device 115 is registered by the aerial server 105. In one embodiment, the registration confirmation 295 includes an identifier and/or index for the aerial device 115 that may be used to access the registration data 293.

Figure 2H is a schematic block diagram illustrating one embodiment of a flight path data request 310. The flight path data request 310 may be communicated to the aerial device 115 to request the flight path data 200 from the aerial device 115. The flight path data request 310 may be organized as a data structure in memory and/or transmitted as digital data. In the depicted embodiment, the flight path data request 310 includes a report periodicity configuration 361, a location information granularity requirement 363, the planned velocity 207, a location information planned time 365, and the aerial device certification 283.

The report periodicity configuration 361 may specify a report time interval or range of report time intervals for reports from the aerial device 115. For example, the report time interval may be in the range of 3 to 10 seconds.

The location information granularity requirement 363 may specify a granularity for reported locations points from the aerial device 115. For example, planned flight path 330 of the aerial device 115 may be reported as a series of geography location points, and these location points can have an inter location point granularity such as 50 m, 100 m, and the like. With larger granularities, the reported location points from the aerial device 115 will be fewer, reducing the signaling bandwidth and accuracy for the reported flight path. With smaller granularities, the reported location points from the aerial device 115 will be more frequent and consume more signaling, but also be more accurate for the reported flight path.

The location information planned time 365 may specify specific resource blocks and/or times for reports from the aerial device 115. The location information planned time 365 may be associated with the planned velocity 207.

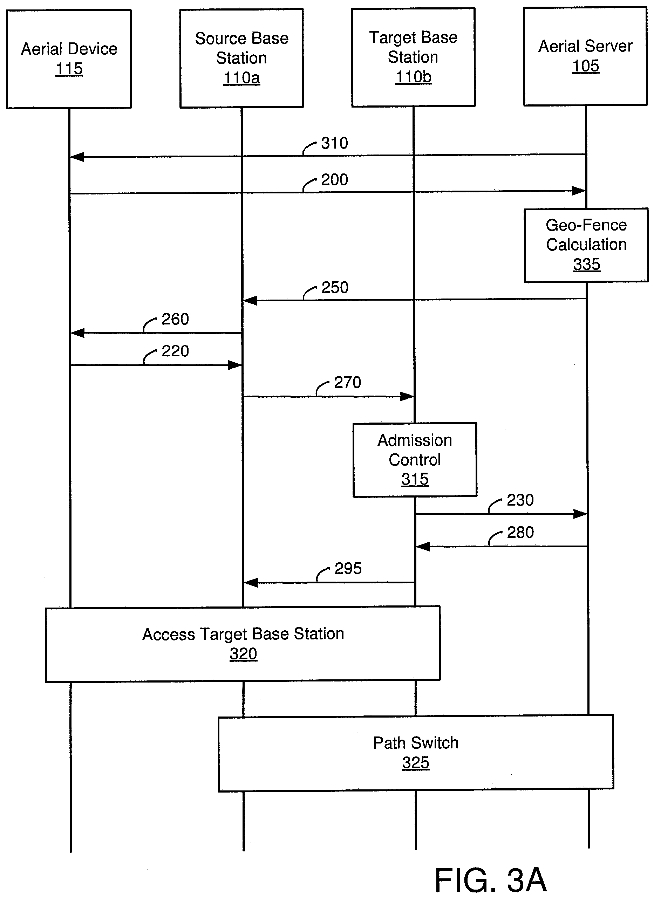

Figure 3A is a schematic block diagram illustrating one embodiment of a geo-fence process. The process may register the aerial device 115 with the aerial server 105. In addition, the process may calculate the geo-fence data 250 for the aerial device 115. The aerial device 115, the source base station 110a, the target base station 110b, and the aerial server 105 are depicted, along with communications between the aerial device 115, the source base station 110a, the target base station 110b, and the aerial server 105.

In one embodiment, the aerial server 105 communicates a flight path data request 310 to the aerial device 115. The flight path data request 310 may be communicated through a base station 110. The aerial device 115 may communicate the flight path data 200 to the aerial server 105. The flight path data 200 may be communicated through a base station 110. In addition, the flight path data 200 may be communicated in response to the flight path data request 310. Alternatively, the flight path data 200 may be communicated without the flight path data request 310.

The aerial server 105 may perform a geo-fence calculation 335. The geo-fence calculation 335 may calculate the geo-fence data 250. The aerial server 105 may communicate the geo-fence data 250 to a base station 110 such as the source base station 110a.

A base station 110 such as the source base station 110a may communicate the measurement data 260 to the aerial device 115. The aerial device 115 may measure the base stations 110 included in the measurement cell list 255 and communicate cell measurements 221 in a measurement report 220 to the base station 110.

In one embodiment, the source base station 110a communicates a handover request 270 to the target base station 110b. The target base station 110b may perform admission control 315 in response to the handover request 270. The admission control 315 may admit the aerial device 115 to the cell of the target base station 110b.

In one embodiment, a base station 110 such as the target base station 110b communicates an aerial device certification request 230 to the aerial server 105. The aerial server 105 may determine whether the aerial device 115 is certified. In addition, the aerial server 105 may communicate an aerial device certification confirmation 280 to the base station 110.

The target base station 110b may communicate a handover request acknowledgement 295 to the source base station 110a to complete the handover of the aerial device 115. The aerial device 115 may perform an access to the target base station 320. In addition, the source base station 110a, the target base station 110b, and the aerial server 105 may perform a path switch 325. The aerial device 115 may release the context of the source base station 110a and communicate through the target base station 110b.

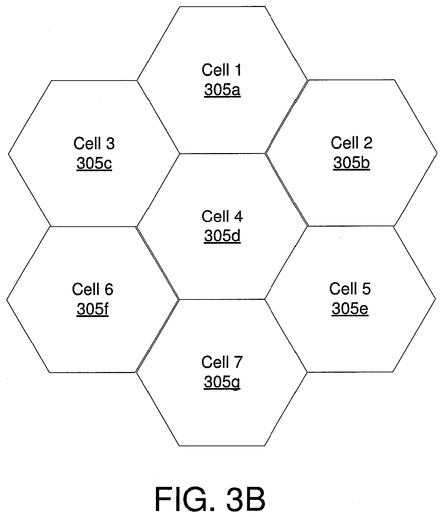

Figure 3B is a schematic drawing illustrating one embodiment of mobile telephone cells (cells) 305. The cells 305 are shown in a top down view as hexagonal areas. For simplicity, only seven cells 305 are shown. Cell boundaries may overlap. Each cell 305 may be serviced by a base station 110. An aerial device 115 may communicate with the base station 110 of the cell 305 while within the area of the cell 305. If the aerial device 115 navigates from a first cell 305 to a second cell 305, the communications with the aerial device 115 may be transferred from the first cell 305 to the second cell 305. Adjacent cells 305 may be neighbor cells 305. In addition, base stations 110 in adjacent cells are neighbor base stations 110.

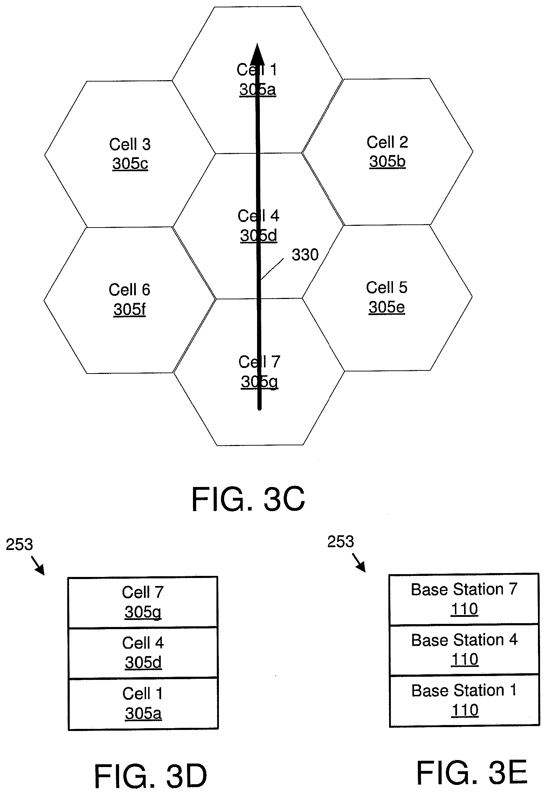

Figure 3C is a schematic drawing illustrating one embodiment of cells 305 and an aerial device flight path 330. The flight path 330 may be the planned route of the aerial device 115. Because the aerial device 115 is typically positioned at a higher elevation than a mobile device, the aerial device 115 may be able to measure the base stations 110 of more cells 305. However, the measurement of the base stations of the additional cells 305 increases the burden on both the system 100 and the aerial device 115. As a result, it is advantageous to limit the cells 305 with which the aerial device 115 interacts.

Figure 3D is a schematic block diagram illustrating one embodiment of a cell list 253. The cell list 253 may be for the flight path 330 of Figure 3C. The cell list 253 may be organized as a data structure in a memory and/or transmitted as digital data. In the depicted embodiment, the cell list 253 includes indicators for each cell 305 that the aerial device 115 is permitted to communicate with. In one embodiment, the cell list 253 is organized in the order in which the aerial device 115 is expected to pass through the cells 305.

Figure 3E is a schematic block diagram illustrating one embodiment of a cell list 253. The cell list 253 may be for the flight path 330 of Figure 3C. The cell list 253 may be organized as a data structure in a memory and/or transmitted as digital data. In the depicted embodiment, the cell list 253 includes indicators for each base station 110 that the aerial device 115 is permitted to communicate with. In one embodiment, the cell list 253 is organized in the order in which the aerial device 115 is expected to access the base stations 110.

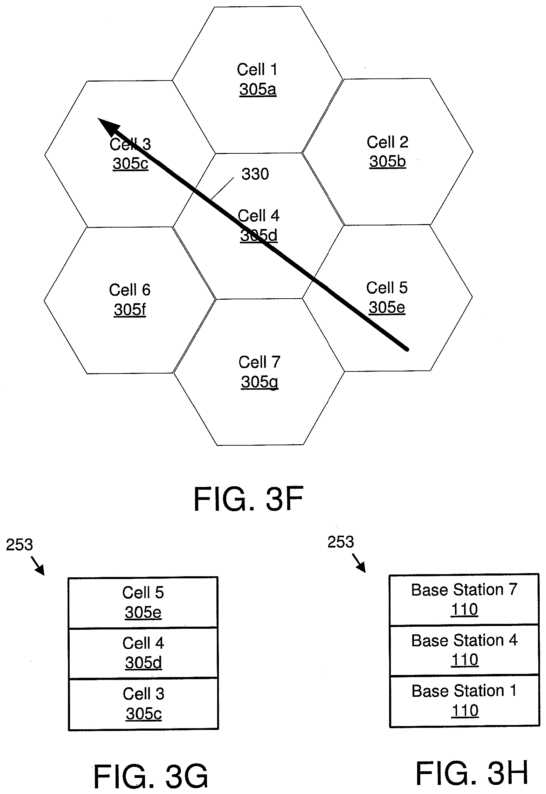

Figure 3F is a schematic diagram illustrating one alternate embodiment of cells 305 and an aerial device flight path 300. In the depicted embodiment, the flight path 330 is modified from Figure 3C.

Figure 3G is a schematic block diagram illustrating one embodiment of a cell list 253. The cell list 253 may be for the modified flight path 330 of Figure 3F. The cell list 253 may be organized as a data structure in a memory and/or transmitted as digital data. In the depicted embodiment, the cell list 253 includes indicators for each cell 305 that the aerial device 115 is permitted to communicate with.

Figure 3H is a schematic block diagram illustrating one alternate embodiment of a cell list 253. The cell list 253 may be for the flight path 330 of Figure 3F. The cell list 253 may be organized as a data structure in a memory and/or transmitted as digital data. In the depicted embodiment, the cell list 253 includes indicators for each base station 110 that the aerial device 115 is permitted to communicate with.

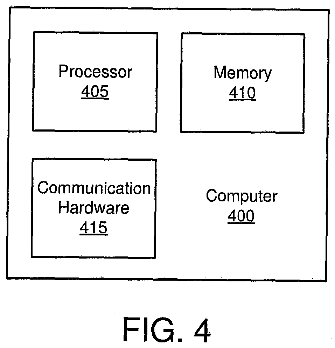

Figure 4 is a schematic block diagram illustrating one embodiment of a computer 400. The computer 400 may be embodied in one or more of the aerial device 115, the base stations 110, and the aerial server 105. Each of aerial device 115, base station 110, and aerial server 105 may include one or more computers 400. In the depicted embodiment, the computer 400 includes a processor 405, a memory 410, and communication hardware 415. The memory 410 may include a semiconductor storage device, a hard disk drive, an optical storage device, a micro mechanical storage device, or combinations thereof. The memory 410 may store code. The processor 405 may execute the code. The communication hardware 415 may communicate with other devices through optical connections, wired connections, wireless communications, or combinations thereof. The communication hardware 415 may include a transmitter and a receiver.

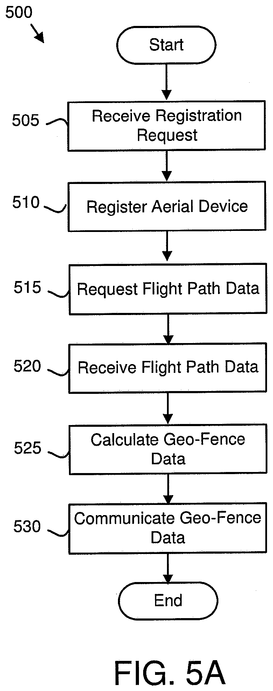

Figure 5A is a schematic flow chart diagram illustrating one embodiment of a geo-fence generation method 500. The method 500 may calculate and communicate the geo-fence data 250 for base stations 110 and the aerial device 115. The method 500 may be performed by a processor 405 of the aerial server 105.

The method 500 starts, and in one embodiment, the processor 405 receives 505 a registration request 291 for an aerial device 115 from a base station 110. The registration request 291 may identify the aerial device 115. For example, the registration request 291 may include an identifier of the aerial device 115. Alternatively, the registration request 291 may include an identifier generated by the base station 110 for the aerial device 115.

The processor 405 may register 510 the aerial device 115 at the aerial server 105. In one embodiment, the processor 405 creates the registration data 293 for the aerial device 115.

In one embodiment, the processor 405 requests 515 flight path data 200 from the aerial device 115. The processor 405 may communicate a flight path data request 310 to the aerial device 115 to request the flight path data 200.

The processor 405 may receive 520 the flight path data 200 from the aerial device 115. In a certain embodiment, the flight path data 200 is received 520 in response to requesting 515 the flight path data 200. Alternatively, the flight path data 200 may be received without a request 515.

The processor 405 may calculate 525 the geo-fence data 250 for the aerial device 115. The geo-fence data 250 may comprise the geo-fence boundaries 251 and the cell list 253 of base stations 110 permitted to communicate with the aerial device 115. Each base station 110 of the cell list 253 may be within the geo-fence boundaries 251. In an alternate embodiment, each cell 305 of the cell list 253 may be within the geo-fence boundaries 251. In a certain embodiment, each cell 305 of the cell list 253 is within a specified guard band distance of the geo-fence boundaries 251.

The processor 405 may communicate 530 the geo-fence data 250 to the base station 110 and the method 500 ends. The method 500 registers the aerial device 115 and calculates the geo-fence data 250. As a result, the aerial device 115 is enabled to operate within the system 100.

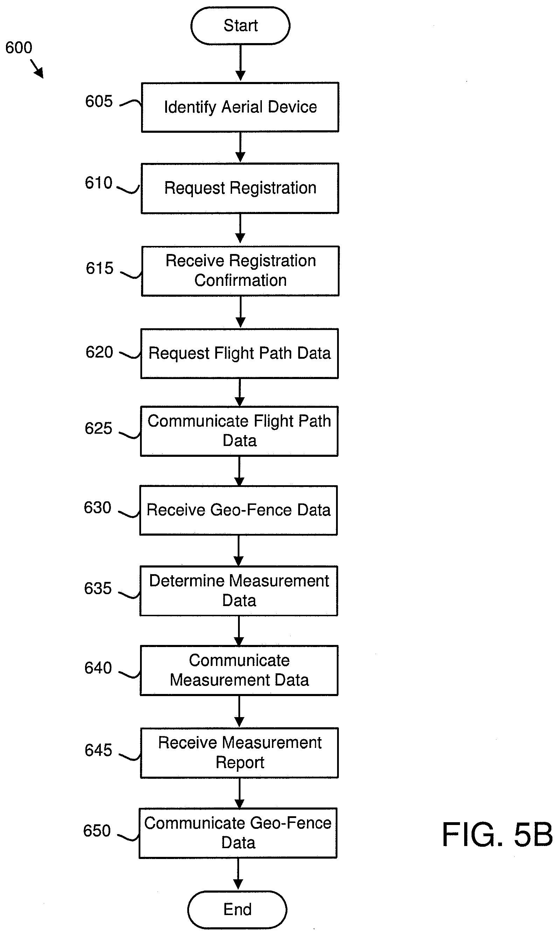

Figure 5B is a schematic flow chart diagram illustrating one alternate embodiment of a geo-fence generation method 600. The method 600 may generate geo-fence data 250 for a base station 110. The method 600 may be performed by one or more processors 405 of one or more base stations 110.

The method 600 starts, and in one embodiment, the processor 405 identifies 605 an aerial device 115. The processor 405 may identify 605 the aerial device 115 in response to the aerial device 115 accessing the base station 110. The aerial device 115 may inform the based station 110 that the aerial device 115 has flight path data 200. The aerial device 115 may indicate that the flight path data 200 is available in a Radio Resource Control (RRC) setup procedure. In one embodiment, a RRCConnectionSetupComplete message is communicated by the aerial device 115 to indicate that the flight path data 200 is available.

The processor 405 may request 610 that the aerial server 105 register the aerial device 115 as described for Figure 5A. The processor 405 may communicate the registration request 291 to the aerial server 105 to request 610 registration of the aerial device 115.

The processor 405 may further receive 615 a registration confirmation 295. The registration confirmation 295 may be received in response to the aerial server 105 registering the aerial device 115 and/or creating the registration data 293.

The processor 405 may request 620 the flight path data 200 from the aerial device 115. In one embodiment, the processor 405 communicates a flight path data request 310 from the aerial server 105 to the aerial device 115. In addition, the processor 405 may communicate 625 the flight path data 200 from the aerial device 115 to the aerial server 105.

The processor 405 may receive 630 the geo-fence data 250 from the aerial server 105. The geo-fence data 250 may be received 630 in response to communicating 625 the flight path data 200 to the aerial server 05.

The processor 405 may determine 635 the measurement data 260 from the geo-fence data 250. In one embodiment, the base stations 110 and/or cells 305 of the cell list 253 that are also one of the base station 110 or base station cell 305 in communication with the aerial device 115 and a neighbor base station 110 or base station cell 305 corresponding to the base station 110 are determined 635 to be included in the measurement data 260.

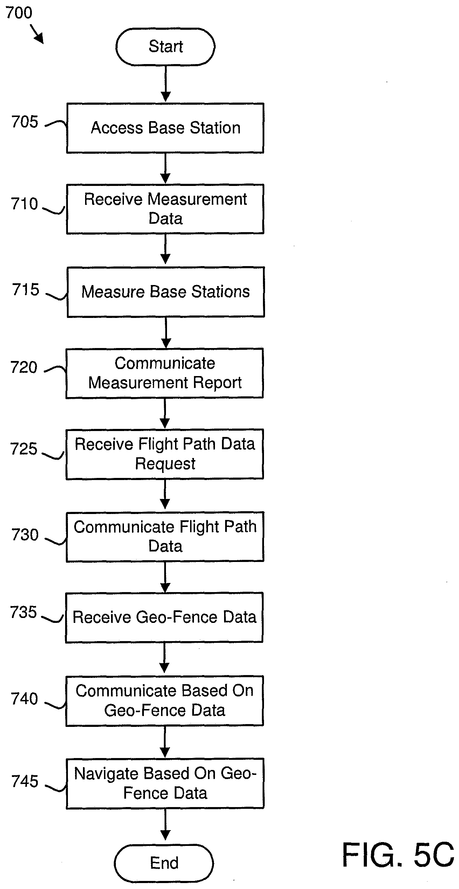

The processor 405 may communicate 640 the measurement data 260 to the aerial device 115. In addition, the processor 405 may receive 645 the measurement report 220 from the aerial device 115. In one embodiment, the processor 405 communicates 650 the geo-fence data 250 to the aerial device 115 and the method 600 ends. The aerial device 115 may employ the geo-fence data 250 as will be described hereafter in Figure 5C.

Figure 5C is a schematic flow chart diagram illustrating one embodiment of a geo-fence data utilization method 700. The method 700 may receive and utilize geo-fence data 250 at the aerial device 115. The method 700 may be performed by the processor 405 of the aerial device 115.

The method 700 starts, and in one embodiment, the processor 405 accesses 705 a base station 110. In one embodiment, the processor 405 indicates that the flight path data 200 is available in an RRC setup procedure when accessing 705 the base station 110.

The processor 405 may further receive 710 the measurement data 260 from the base station 110. The measurement data 260 may be received 710 in response to accessing 705 the base station 110. The processor 405 may further measure 715 the base stations 110 indicated by the measurement data 260. For example, the processor 405 may measure signal strength, available bandwidth, and the like.

In one embodiment, the processor 405 generates the measurement report 220 from the measurements received from the base stations 110. The measurement report 220 may be based only on measurements to the base stations 110 and/or cells 305 indicated by the measurement data 260. The processor 405 may communicate 720 the measurement report 220 to the base station 110.

The processor 405 may receive 725 the flight path data request 310 via the base station 110. The flight path data request 310 may be initiated by the aerial server 105. In one embodiment, the flight path data request 310 includes the aerial device certification 283. The aerial device certification 283 may validate the flight path data request 310.

The processor 405 may communicate 730 the flight path data 200 to the aerial server 105 via the base station 110. The flight path data 200 may be communicated 730 in response to the flight path data request 310. In addition, the flight path data 200 may be communicated 730 in response to validating the flight path data request 310. In one embodiment, the processor 405 communicates 730 updated flight path data 200 in response to a change in a flight path 330.

The processor 405 may receive 735 the geo-fence data 250. The geo-fence data 250 may be communicated from the aerial server 105 via the base station 110. The processor 405 may communicate 740 with the base stations 110 of the various cells 305 based on the geo-fence data 250. In one embodiment, the processor 405 only communicates with the base stations 110 and/or cells 305 of the cell list 253. All the base stations 110 of the cell list 253 may be within the geo-fence boundaries 251 of the geo-fence data 250.

In one embodiment, the processor 405 navigates 745 the aerial device 115 within the geo-fence boundaries 251 and the method 700 ends. As a result, the aerial device 115 may be restricted to specified areas by the geo-fence boundaries 251.

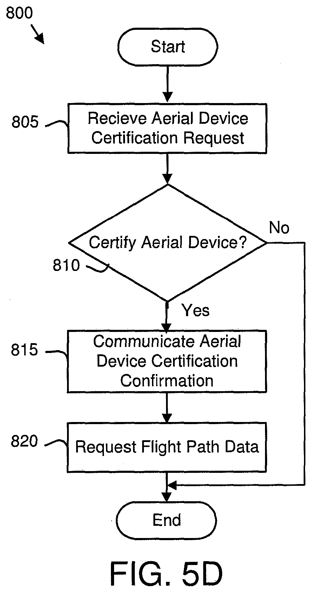

Figure 5D is a schematic flow chart diagram illustrating one embodiment of an aerial device certification method 800. The method 800 may certify an aerial device 115 and confirm certification of the aerial device 115 to a base station 110. The method 800 may be performed by a processor 405 of the aerial server 105 and/or the base station 110.

The method 800 starts, and in one embodiment, the processor 405 receives 805 the aerial device certification request 230 from the base station 110 for the aerial device 115. The processor 405 may further determine 810 whether the aerial device 115 is certified. In one embodiment, the processor 405 indexes an identifier for the aerial device 115 to a record in a database to determine 810 the aerial device 115 is certified. Alternatively, the processor 405 may decode a specified key from the identifier for the aerial device 115 to determine 810 the aerial device 115 is certified.

If the processor 405 determines 810 that the aerial device 115 is not certified, the method 800 ends without certifying the aerial device. 115. In one embodiment, a base station 110 will not communicate with the aerial device 115 if the aerial device 115 is not certified.

If the aerial device 115 is certified, the processor 405 may communicate the aerial device certification confirmation 280 to the base station 110. The base station 110 may communicate with the aerial device 115 in response to receiving the aerial device certification confirmation 280. In one embodiment, the base station 110 requests 820 the flight path data 200 from the aerial device 115 in response to receiving the aerial device certification confirmation 280 and the method 800 ends. The processor 405 may communicate the flight path data request 310 to request 820 the flight path data 200.

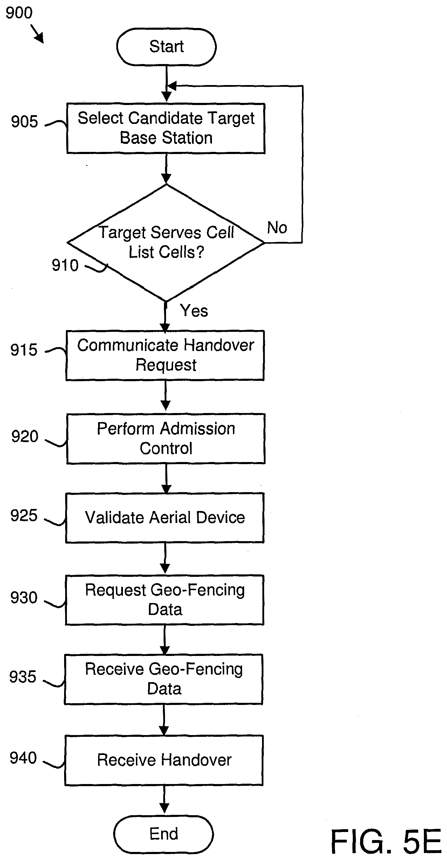

Figure 5E is a schematic flow chart diagram illustrating one embodiment of an aerial device handover method 900. The method 900 may hand over servicing of the aerial device 115 from the source base station 110a to the target base station 110b. The method 900 may be performed by the processors 405 of the source base station 110a and the target base station 110b.

The method 900 starts, and in one embodiment, the processor 405 of the source base station 110a selects 805 a candidate target base station 110b.The processor 405 may further determine 810 whether the candidate target base station 110b and/or the cell 305 corresponding to the candidate target base station 110b is in the cell list 253. If the candidate target base station 110b is not in the cell list 253, the processor 405 selects 805 another candidate target base station 110b.

If the candidate target base station 110b is in the cell list 253, the processor 405 may communicate 915 the handover request 270 to the candidate target base station 110b. The processor 405 of the candidate target base station 110b may perform admission control 310 for the candidate target base station 110b.

The processor 405 may validate 925 the aerial device 115 at the candidate target base station 110b. In addition, the processor 405 of the candidate target base station 110b may request 930 the geo-fencing data 250 for the aerial device 115 from the source base station 110a. The processor 405 the candidate target base station 110b may receive 935 the geo-fencing data 250. The processor 405 of the candidate target base station 110b may further receive 940 the handover of the aerial device 115, completing the handover, and the method 900 ends.

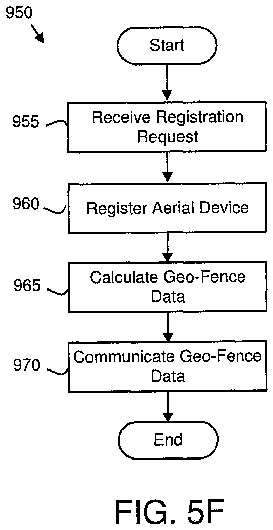

Figure 5F is a schematic flow chart diagram illustrating one embodiment of a geo-fence generation method. The method 950 may calculate and communicate the geo-fence data 250 for base stations 110 and the aerial device 115 without receiving flight path data 200. The method 950 may be performed by a processor 405 of the aerial server 105.

The method 950 starts, and in one embodiment, the processor 405 receives 955 a registration request 291 for an aerial device 115 from a base station 110. The registration request 291 may identify the aerial device 115. For example, the registration request 291 may include an identifier of the aerial device 115. Alternatively, the registration request 291 may include an identifier generated by the base station 110 for the aerial device 115.

The processor 405 may register 960 the aerial device 115 at the aerial server 105. In one embodiment, the processor 405 creates the registration data 293 for the aerial device 115.

The processor 405 may calculate 965 the geo-fence data 250 for the aerial device 115. The geo-fence data 250 may comprise the geo-fence boundaries 251 and the cell list 253 of base stations 110 permitted to communicate with the aerial device 115. Each base station 110 of the cell list 253 may be within the geo-fence boundaries 251. In an alternate embodiment, each cell 305 of the cell list 253 may be within the geo-fence boundaries 251. In a certain embodiment, each cell 305 of the cell list 253 is within a specified guard band distance of the geo-fence boundaries 251.

The processor 405 may communicate 970 the geo-fence data 250 to the base station 110 and the method 950 ends. The method 950 registers the aerial device 115 and calculates the geo-fence data 250 without the flight path data 200. As a result, the aerial device 115 is enabled to operate within the system 100. In addition, the aerial device 115 may be restricted to an area of navigation and/or restricted in communicating with base stations 110, even if the aerial device 115 does not provide flight path data 200.

The embodiments calculate and disseminate the geo-fence data 250 for the aerial device 115. The geo-fence data 250 may employed to limit communications of the aerial device 115 with some base stations 110, increasing the efficiency of the system 110. In addition, the geo-fence data 250 may be used to limit the flight path 330 of the aerial device 115.

Embodiments may be practiced in other specific forms. The described embodiments are to be considered in all respects only as illustrative and not restrictive. The scope of the invention is, therefore, indicated by the appended claims rather than by the foregoing description.

## Claims

1. A method (700) performed by an aerial device (115), the method comprising:
accessing (705), by use of a processor, a base station from the aerial device (115);
receiving (735) geo-fence data, the geo-fence data comprising geo-fence boundaries and a cell list of base stations the aerial device is permitted to communicate with, wherein all base stations of the cell list are within the geo-fence boundaries;
receiving (710) measurement data from the base station, the measurement data indicating base stations that are both in the cell list and are one of the base station and a neighbor base station to the base station;
measuring (715) the base stations indicated in the measurement data;
communicating (720) a measurement report based only on measurements to the base stations indicated in the measurement data; and
communicating flight path data to the base station in response to receiving a flight path data request that comprises a location information granularity requirement for the flight path data.

2. The method (700) of claim 1, wherein the aerial device only communicates with the base stations of the cell list.

3. The method (700) of claim 1, wherein the flight path data is communicated to the base station in response to receiving a flight path data request that comprises at least one of a report periodicity configuration and an associated planned time for location information.

4. The method (700) of claim 1, wherein the flight path data is communicated to the base station in response to receiving an aerial device certification from the base station.

5. The method (700) of claim 1, wherein the aerial device indicates that the flight path data is available in a Radio Resource Control setup procedure.

6. The method (700) of claim 1, the flight path data comprises at least one of location points, a planned velocity, location point times, and a flight path plan.

7. The method (700) of claim 1, the method further comprising communicating updated flight path data in response to a change in a flight path.

8. An apparatus (400) comprising:
a processor (405) arranged to:
access a base station from an aerial device;
receive geo-fence data, the geo-fence data comprising geo-fence boundaries and a cell list of base stations the aerial device is permitted to communicate with, wherein all base stations of the cell list are within the geo-fence boundaries;
receive measurement data from the base station, the measurement data indicating base stations that are both in the cell list and are one of the base station and a neighbor base station to the base station;
measure the base stations indicated in the measurement data;
communicate a measurement report based only on measurements to the base stations indicated in the measurement data; and
communicate flight path data to the base station in response to receiving a flight path data request that comprises a location information granularity requirement for the flight path data.

## Patentansprüche

1. Verfahren (700), das von einer Luftfahrtvorrichtung (115) durchgeführt wird, wobei das Verfahren umfasst:
Zugreifen (705), unter Verwendung eines Prozessors, auf eine Basisstation von der Luftfahrtvorrichtung (115) aus;
Empfangen (735) von Geofence-Daten, wobei die Geofence-Daten Geofence-Grenzen und eine Zellenliste von Basisstationen umfassen, mit denen die Luftfahrtvorrichtung kommunizieren darf, wobei sich alle Basisstationen der Zellenliste innerhalb der Geofence-Grenzen befinden;
Empfangen (710) von Messdaten von der Basisstation, wobei die Messdaten Basisstationen angeben, die sowohl in der Zellenliste enthalten sind als auch eine von der Basisstation und einer benachbarten Basisstation der Basisstation sind;
Messen (715) der in den Messdaten angegebenen Basisstationen;
Übermitteln (720) eines Messberichts, der nur auf Messungen basiert, an die in den Messdaten angegebenen Basisstationen; und
Übermitteln von Flugwegdaten an die Basisstation als Reaktion auf ein Empfangen einer Flugwegdatenanfrage, die eine Anforderung hinsichtlich der Granularität der Positionsinformationen für die Flugwegdaten umfasst.

2. Verfahren (700) nach Anspruch 1, wobei die Luftfahrtvorrichtung nur mit den Basisstationen der Zellenliste kommuniziert.

3. Verfahren (700) nach Anspruch 1, wobei die Flugwegdaten an die Basisstation als Reaktion auf ein Empfangen einer Flugwegdatenanfrage übermittelt werden, die mindestens eine von einer Konfiguration der Berichtsperiodizität und einem zugehörigen geplanten Zeitpunkt für Positionsinformationen umfasst.

4. Verfahren (700) nach Anspruch 1, wobei die Flugwegdaten an die Basisstation als Reaktion auf ein Empfangen einer Zertifizierung der Luftfahrtvorrichtung von der Basisstation übermittelt werden.

5. Verfahren (700) nach Anspruch 1, wobei die Luftfahrtvorrichtung anzeigt, dass die Flugwegdaten verfügbar sind, in einem Radio Resource Control-Einrichtungsverfahren.

6. Verfahren (700) nach Anspruch 1, wobei die Flugwegdaten mindestens eines von Positionspunkten, einer geplanten Geschwindigkeit, Positionspunktzeiten und einem Flugwegplan umfassen.

7. Verfahren (700) nach Anspruch 1, wobei das Verfahren weiter ein Übermitteln aktualisierter Flugwegdaten als Reaktion auf eine Änderung eines Flugwegs umfasst.

8. Vorrichtung (400), umfassend:
einen Prozessor (405), der angeordnet ist zum:
Zugreifen auf eine Basisstation von einer Luftfahrtvorrichtung aus;
Empfangen von Geofence-Daten, wobei die Geofence-Daten Geofence-Grenzen und eine Zellenliste von Basisstationen umfassen, mit denen die Luftfahrtvorrichtung kommunizieren darf, wobei sich alle Basisstationen der Zellenliste innerhalb der Geofence-Grenzen befinden;
Empfangen von Messdaten von der Basisstation, wobei die Messdaten Basisstationen angeben, die sowohl in der Zellenliste enthalten sind als auch eine von der Basisstation und einer benachbarten Basisstation der Basisstation sind;
Messen der in den Messdaten angegebenen Basisstationen;
Übermitteln eines Messberichts, der nur auf Messungen basiert, an die in den Messdaten angegebenen Basisstationen; und
Übermitteln von Flugwegdaten an die Basisstation als Reaktion auf ein Empfangen einer Flugwegdatenanfrage, die eine Anforderung hinsichtlich der Granularität der Positionsinformationen für die Flugwegdaten umfasst.

## Revendications

1. Procédé (700) réalisé par un dispositif aérien (115), le procédé comprenant :
l'accès (705), à l'aide d'un processeur, à une station de base à partir du dispositif aérien (115) ;
la réception (735) de données de périmètre virtuel, les données de périmètre virtuel comprenant des limites de périmètre virtuel et une liste de cellules de stations de base avec lesquelles le dispositif aérien est autorisé à communiquer, toutes les stations de base de la liste de cellules se trouvant à l'intérieur des limites de périmètre virtuel ;
la réception (710) de données de mesure en provenance de la station de base, les données de mesure indiquant les stations de base qui figurent à la fois dans la liste de cellules et qui sont l'une parmi la station de base et une station de base voisine de la station de base ;
la mesure (715) des stations de base indiquées dans les données de mesure ;
la communication (720) d'un rapport de mesure basé uniquement sur les mesures aux stations de base indiquées dans les données de mesure ; et
la communication de données de trajectoire de vol à la station de base en réponse à la réception d'une demande de données de trajectoire de vol qui comprend une exigence de granularité des informations de localisation pour les données de trajectoire de vol.

2. Procédé (700) selon la revendication 1, dans lequel le dispositif aérien communique uniquement avec les stations de base de la liste de cellules.

3. Procédé (700) selon la revendication 1, dans lequel les données de trajectoire de vol sont communiquées à la station de base en réponse à la réception d'une demande de données de trajectoire de vol comprenant au moins l'un parmi une configuration de périodicité de rapport et une heure prévue associée pour les informations de localisation.

4. Procédé (700) selon la revendication 1, dans lequel les données de trajectoire de vol sont communiquées à la station de base en réponse à la réception d'une certification de dispositif aérien en provenance de la station de base.

5. Procédé (700) selon la revendication 1, dans lequel le dispositif aérien indique que les données de trajectoire de vol sont disponibles dans une procédure de configuration de commande de ressources radio, RRC (pour « Radio Resource Control »).

6. Procédé (700) selon la revendication 1, dans lequel les données de trajectoire de vol comprennent au moins l'un parmi des points de localisation, une vitesse prévue, des heures des points de localisation et un plan de trajectoire de vol.

7. Procédé (700) selon la revendication 1, le procédé comprenant en outre la communication de données de trajectoire de vol mises à jour en réponse à une modification d'une trajectoire de vol.

8. Appareil (400) comprenant :
un processeur (405) agencé pour :
accéder à une station de base à partir d'un dispositif aérien ;
recevoir des données de périmètre virtuel, les données de périmètre virtuel comprenant des limites de périmètre virtuel et une liste de cellules de stations de base avec lesquelles le dispositif aérien est autorisé à communiquer, toutes les stations de base de la liste de cellules se trouvant à l'intérieur des limites de périmètre virtuel ;
recevoir des données de mesure en provenance de la station de base, les données de mesure indiquant les stations de base qui figurent à la fois dans la liste de cellules et qui sont l'une parmi la station de base et une station de base voisine de la station de base ;
mesurer les stations de base indiquées dans les données de mesure ;
communiquer un rapport de mesure basé uniquement sur les mesures aux stations de base indiquées dans les données de mesure ; et
communiquer des données de trajectoire de vol à la station de base en réponse à la réception d'une demande de données de trajectoire de vol qui comprend une exigence de granularité des informations de localisation pour les données de trajectoire de vol.
